Europäisches Patentamt

European Patent Office

Office européen des brevets

(11) Veröffentlichungsnummer: **0 541 847 A1**

# (12) EUROPÄISCHE PATENTANMELDUNG

(21) Anmeldenummer: **91119423.1**

(22) Anmeldetag: **14.11.91**

(51) Int. Cl.5: **F01B 21/02**, F16D 31/02

(43) Veröffentlichungstag der Anmeldung:
**19.05.93 Patentblatt 93/20**

(84) Benannte Vertragsstaaten:
**AT BE CH DE FR GB IT LI LU NL**

(71) Anmelder: **Anger, Heinz**
**Auto−Union−Ring 12**
**W−8071 Lenting(DE)**

(72) Erfinder: **Anger, Heinz**
**Auto−Union−Ring 12**
**W−8071 Lenting(DE)**

(54) **Hydro−Energie.**

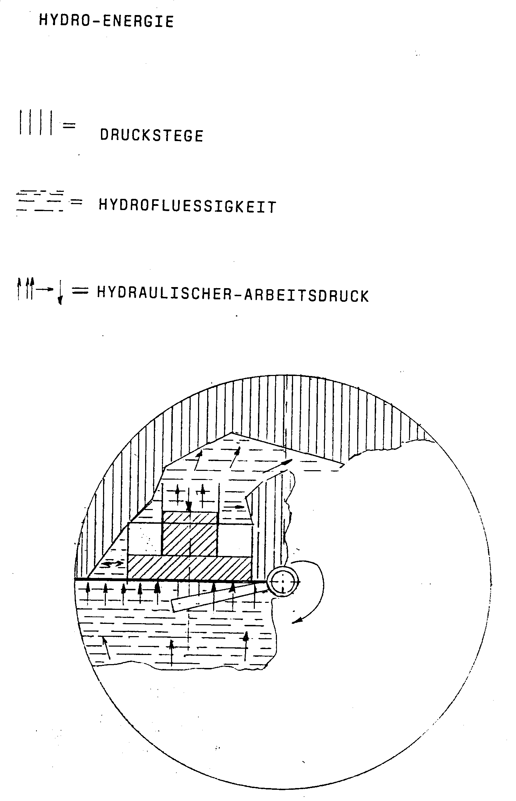

(57) Hydro−Energie.Neuartiges Hydro−System,dass in fortwährend laufenden Umdrehungen, hydraulisch steigernd,Kräfte von Grundantriebe in hohe Entnahmetriebe übersetzt.Die Grösse einer Kraftentnahme ist hierbei abhängig:von der Grösse des Kreisringzylinders mit einbaumöglichen Druckflächen,die Anzahl der Hydrozylinder im Kreisring und die Flächenunterschiede der druckerzeugenden Kolben.Weitehin können Kreisringzylinder mit Uebersetzungs−Inhalt aneinander(paketarteg)gebaut werden,wobei sich das Uebersetzungs−Verhältnis gemäss Anzahl multipliziet.Uebersetzungen,Antriebskraft zur Entnahmekraft,sind hierbei im Verhältnis von eins zu zehn bis eins zu tausend und mehr gegeben.(Bild 1)

Bei diesem System gibt es keine druckerzeugende Pumpen.

Die Bauweisen sind sehr variabel,als stationäre Anlage oder nachgeschaltet an vorhandene Motoren,Dampf−Wasserkraft−

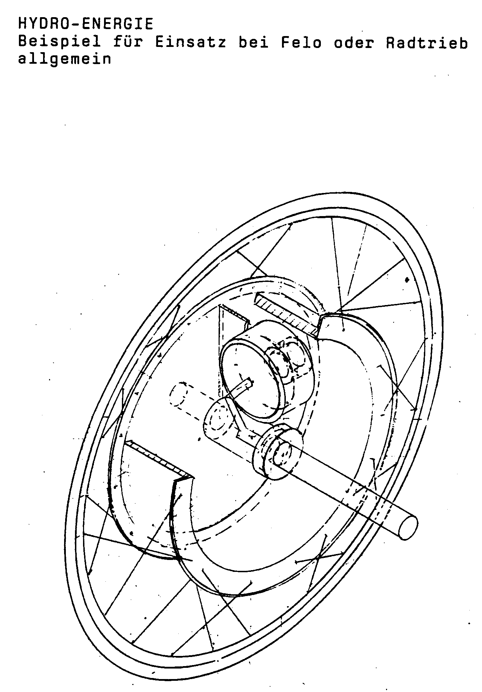

Windmaschinen,Turbinen.Sehr vorteilhaft ist,dieses System bei Neuanlagen der vorgenannten Maschinen voll zu integrieren.Als weiere Einsatzmöglichkeit,bei Fahrzeugen kann dieses System direkt in die Antriebsräder eigebaut werden.(Bild 4)

Die Funktion:

Auf der antreibenden Welle,die den Fremdantrieb aufnimmt,ist der Kreisringzylinder Wälzlager gelagert aufgebaut.Die Wellendrehkraft wird durch Ringdrucksegmente oder Kniehebelsysteme auf die Kolben übermittelt,die in die Hydroflüssigkeit drükken.Die Kolben haben zwei unterschiedliche Durchmesser,je Durchmesser eine besondere Arbeits−

funktion, sie führen in hydrofähige Zylinder.Im Kreisringzylinder sind Druckflächen,Querstege,Kniehebelsysteme und die druckübersetzenden Hydrozylinder mit Kolben eingebaut. DerKreisringzylinder ist mit Hydro−Flüssigkeit gefüllt und öldicht verschraubt.Die hydraulische Ueberstzung erfolgt aufgrund Flächenunterschied der kleinen Kolbenflächen zu den Druckflächen, und Querstegen.Zudem drückt die Hydroflüssigkei auch auf die grossen Kolbenflächen,die einmal Druck übersetzen,zum anderen die übersetzte Kraft auf den kleinen Kolben überträgt und drucksteigernd wirkt.

Anlagegrössen:

Die Durchmesser der Kreisringzylinder können zwischen 150mm und 5m betragen, wenn technisch möglich auch grösser.Je nach Energiebedarf ist es wahlweise gegeben.

HYDRO-ENERGIE

||||  =  DRUCKSTEGE

≡≡  =  HYDROFLUESSIGKEIT

|⫼→↓  =  HYDRAULISCHER-ARBEITSDRUCK

HYDRO-ENERGIE
Beispiel für Einsatz bei Felo oder Radtrieb
allgemein

2

Die Erfindung bezieht sich auf hydraulische Antriebe,für Fahrzeuge,Motoren,Turbinen und ma – nuell betriebene Geräte.Hierbei wird die hydrauli – sche Uebersetzungskraft genutzt,um eine geringere Antriebskraft in eine grösere Abtriebskraft nutzs – bringend einzusetzen.Das wesendliche dabei ist,es sind keine hydraulischen Pumpen erforderlich,die den hydraulischen Druck erzeugen.

Hydraulische Anlagen gibt es seit Jahrzehn – ten,entsprechend gross sind die unterschiedlichen Anwendungs – und Bedarfsmöglichkeiten.Bei allen vorhandenen Anlagen wird der hydraulisch erfor – derliche Druck durch Pumpen erzeugt,der dann Kolben in Zylindern geradlinig oder Hydromotoren radial treibt.Die hydraulische Fähigkeit, Hydroflüs – sigkeit aufgrund des Druckfortpflanzungs – Geset – zes zur hydraulischen Kraftübersetzung voll zu nutzen,ist noch lange nicht erschöpft.Es gibt wei – tere Möglichkeiten um die hydraulische Kraftüber – setzungsFähigkeit einzusetzen.

Meine Erfindung bringt in der Hydro – Energie eine neue massgebende Variante.Als Grundlagen – funktion ist auch hierbei die uralte Wirkung der hydraulischen Kraftübertragung (Kraftübersetzung) eingesetzt.
In einem Kreisringzylinder sind Hydrozylinder ein – gebaut, die zugehörige Kolben führen,weiterhin sind Querflächen und zusetzliche Druckflächen darin eingesetzt,auf die der Arbeitsdruck wirkt.Der Kreisringzylinder führt mitte Nabe eine Welle.Auf der Welle ist ein Ringhebelsegment fest aufge – baut,das eine externe Drehkraft von der Welle auf die Kolben überträgt.Der Kreisringzylinder ist mit Hydroflüssigkeit,voll minus ca 10 ml,gefüllt.Der Kreisringzylinder ist mit einer Abdeckung (Deckel)öldicht verschraubt.
Die hydraulischen Arbeitszylinder und Kolben ha – ben zwei unterschiedliche Durchmesser.Jeder Durchmesser hat eine separate Funktion.Für grösseren Kraftbedarf,grössere Energiekapaziät sind zusätzlich im Kreisringzylinder Kniehebelsy – steme eingebaut,die durch Kurbeltrieb arbeiten.

Die Funktionsbeschreibung:
Der mit hydrofähiger Flüssigkeit gefüllte und mit den vorgenannten Funktiosteilen belegte Kreis – ringzylinder arbeitet:durch fremde Drehkraft auf die Welle,Kraftweitergabe durch Segmente auf die Kolben.Die Kolben drücken in die Hydroflüssig – keit,übersetzen aufgrund grösserer Drukflächen die Antriebsdrekraft.Die übersetzte Kraft auf den Kreisringzylinder ist die Entnahmekraft zur wahl – weisen Verwendung.

Funktionsbeschreibung einzelner Segmente (Teile):
Der Kreisringzylinder bestehend aus,Kreisring ,Nabe,Boden mit Kraftentnahmeschei – be,Druckflächen,Querstege mit Durchbruch für die grossen Durchmesser der Kolben,in einem Stück.

Die Funktion:Kraftaufnahme,hydraulisch übersetzen und Entnahme der übersetzten Kraft.
Kniehebelsysteme: bestehend aus,Gelenkflanschen und Gelenkbolzen mit Federringe.
Die Funktion:Die Drehkraft von der Welle Drückt über Kurbelflansche auf die Kniehebelgelenke.Die Wirkkraft der Kniehebel drückt auf die Kol – ben,Kolbenfläche mit grossem Durchmesser.Die Gegenkraft (Halte – Ankerkraft)lastet über einer Konsole auf mitte Nabe und somit auf der Welle.
Die Drehkraft von der Welle bis zu den Kolben wird ca verdoppelt.
Kolben und Zylinder:bstehend aus je einem Stück mit zwei unterschiedlichen Durchmesser.
Die Funktion:Die kniehebelgesteigerte von der Welle ausgehende Kraft drückt auf die grosse Kolbenfläche,diese Kraft drückt dann von der klei – nen Kolbenfläche aus in die Hydroflüssigkeit.Die unter Druck stehende Hydroflüssigkeit drückt auf die Druckflächen und Querstege, und zusätzlich auch auf die grossen Kolbenflächen.Die hydrauli – sche Uebersetzungsfähigkeit wirkt hierbei im Ver – hältnis,kleiner Kolbenflächen zu den Flächen der Druckflächen,Querstegen und der grossen Kol – benflächen.
Die Druckkraft,die auf die grossen Kolbenflächen wirkt, ergibt eine weitere Drucksteigerung,die die Kraftentnahme erhöht oder die Antriebskraft von der Welle mindert. Lagerung:
Die Welle ist in Lagerböcken durch Wälzlager ge – lagert.
Der Kreisringzylinder ist durch Wälzlager auf der Welle gelagert (herkömmlicher Art).Der Drehwinkel von Welle und Kreiringzylinder ist bis auf einige Grade,die durch den Kolbenhub beeinflusst wer – den,gleich.
Anlagegrössen:
Für den wahlweisen Einsatz und Kraftbedarf sind Grössenverhältnisse gegeben,die ab ca 150 mm bis ca 5 m und mehr (wie technisch machbar)im Kreisringdurchmesser haben.

Kreisrinzylinder können auch aneinander als Paket gebaut werden,wobei eine äusserst grosse hydraulisch übersetzte Kraftentnahme gegeben ist.
Anzahl derHydrozylinder:
mindestens 2 wegen Unwucht,sonst 4 und mehr,je nach Grösse der Kreisringzylinder und Energiebe – darf.
Umdrehungen min:
Die Umdrehungszahlen sind wahlweise, entweder gleich Antrieb oder ab Kraftentnahmesegmenten über – oder untersetzbar.Dieses kann durch Zahnrad – oder Keilrimentrieb erfolgen.
Hydroflüssigkeit:
Alle herkömmliche hydrofähige Flüssigkei – ten,jedoch keine Synthetics.Zu beforzugen ist,rost – und frostfreies Wasser.
Material:

Hochbeanspruchte Teile aus gehärtetem Stahl,sonst Leichtmetall oder hochfester Kunststoff.

Mathematisches hydraulisches Uebersetzungs – Beispiel für einen Hydrozylinder ohne Kniehebel – und Fliehkraft:

Drehkraft auf Welle = 50 N

kleiner Kolben Ø = 3 cm Kolbenfl. = 7.07 cm²

Druckfl.im Kreisringzyl. = 200 cm²

grosser Kolben Ø 10 cm Kolbenfl. = 78.54 cm²

$p = F/A$ = 50 N / 7.07cm² = 7.07 N/cm²

$F = p A$ = 7.07 N/cm² * 200 cm² = 1414 N

$p$ = 7.07 N/cm² drückt auch auf die grosse Kolbenfläche mit Ø 10 cm = 78.54 cm²

$$F = 7.07 \ N/cm^2 * 78.54 \ cm^2$$
$$= 525.28 \ N$$

F im Kreisringzylinder,zwischen Kolbenfläche 3cm Ø und Druckflächen mit Stegen beträgt: 1414 N

F zwischen Kolbenfläche 3cm Ø und Kolbenfläche (gross)1ocm Ø beträgt: 525 N

Dieser Wert ist einmal ein Summand zu 1414 N Und auch ein Steigerungswert zu den 50 N Antriebsdrehkraft auf die Welle.

Weitere Funktionsteile sind Ventile,die Luft – und Lecköleinfluss regulieren.Einmal beim Hydrozylinder(grosser Durchmesser)sowie beim Kreisringzylinder.Ein Leckölverlust ist äusserst gering,Die Abdeckung ist öldicht verschraubt und die obere Wellenseite ist exakt abzudichten.Welle und Kreisringzylinder haben bis auf ca 10 Grad,die durch den Kolbenhub bedingt sind,gleiche Umdrehungen.Eine Umdrehungs – Abnützung der Dichtungen ist minimal.

Abbremsung:

Bei grossen Anlagen sind im Kreisringzylinder,im Bereich der Stege,Druckausgleich – Ventile eizubauen.Es können auch Druckflächen in Gegenrichtung gesetzt oder mechanisch in Gegenrichtung gedreht werden,die zum Abbremsen mit Druckflüssigkeit beaufschlagt werden. Die Ventile können elektrisch,hydraulisch,oder manuell betätigt werden.

Meine Erfindung stellt hirmit ein neues Verfahren vor.

Es gibt keine Systeme, die vergleichbar sind.Vorteilhaft ist hierbei,dass der Aufbau dieser Anlagen relativ einfach ist,und dass keine hydraulisch druckerzeugende Pumpen erforderlich sind.Aufgrund der sehr grossen Uebersetzungsfähigkeit,von geringer Antriebskraft in sehr grosse Abtriebskraft,gibt es sehr viele Verwendungsmöglichkeiten.

Jeder herkömmlichen Antriebsart können diese Anlagen auch nachgespant werden.Dadurch vermindert sich,der herkömmliche Energie – Einsatz,die vossile Verbrennung,und sehr massgebend:die Abgassitiation.

Zeichnungen:

Nachfolgend wird meine Erfindung durch vier Zeichnungen den Darstellungsweg unterstützen.

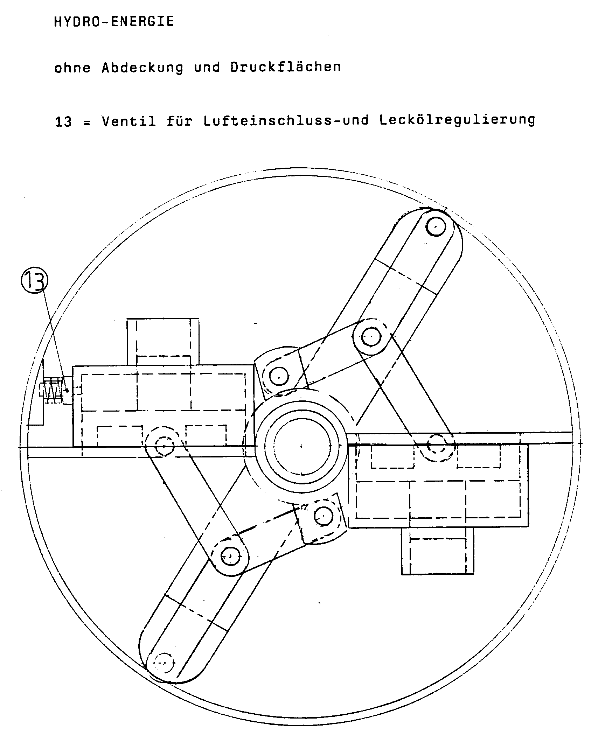

Bild 1 zeigt schematisch die hydraulische Funktionsarstellung.Symbolisch eigezeichnet sind:Druckstege, Quersteg,Hydroflüssigkeit,Druckrichtungen.Weiterhin sind die vorgenannten Funktionssegmente dargestellt. Bild 2 zeigt in Draufsicht den Kreisringzylinder mit den massgebenden Funktionssegmenten,ohne Druckstege und Abdeckung.

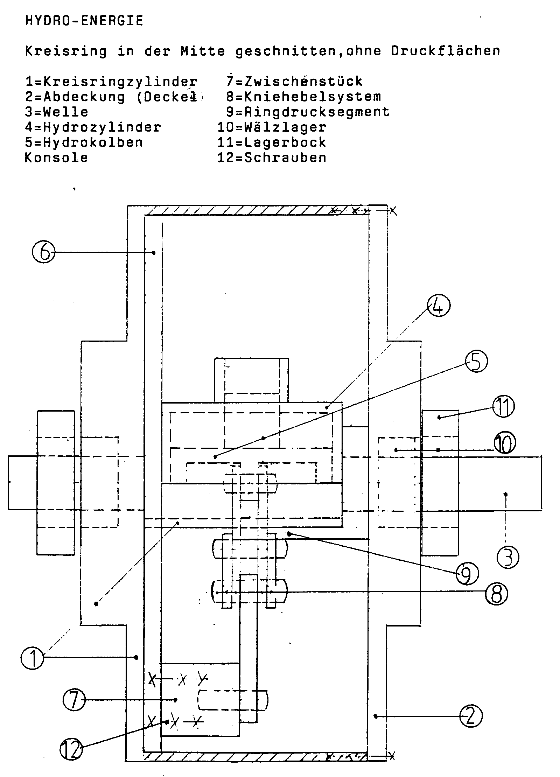

Bild 3 zeigt die Seitenansicht mit nur einem Hydrozylindder und Kolben,der Kreisring ist in der Mitte geschnitten.

Nabe und Welle die der Zylinder verdeckt,sind nicht gestrichelt gezeichnet.Die Einzelteile sind numeriert.

Bild 4 zeigt eine Verwendungs – Möglichkeit im Felo (Fahrrad).In der aufgeschnittenen Hinterradnabe ist nur ein Hydrozylinder dargestellt,zwei sind gegeben.In einer Radnabe,deren Durchmesser mindestens 200mm sein muss,ist das Hydro – Energie – System eingearbeitet.Die Radachse (Welle)ist beim Fahren immer umlaufend ,entsprechend ist die Lagerung im Radrahmen gestaltet.Das Kettenzahnrad (nicht gezeichnet)greift bei Kettentrieb zwangsweise auf die Welle,die dann über Ringhebelsegment den Kolbendruck bewirkt.Der Kreisringzylinder ist so ausgelegt,dass an den Seitenflächen die Radspeichen eingezogen sind.Die Zahnradübersetzungs – Verhältnisse sind wahlweise zu gestalten.

Das Hydro – Energie – System kann auch im Tretlager – Bereich eingebaut werden,hierbei ist dann der Radrahmen anders zu gestalten.

Eine weitere Verwendungs – Variante ist bei Fahrzeugen jeglicher Art gegeben.Hierbei können diese Hydrosysteme in Verbrennungsmotoren voll integriert oder nachgespannt sein, aber auch direkt in die Antriebsräder gebracht werden.

Das Hydro – Energie – System ist überall dort einsetzbar,wo es,gleich welcher Treibart ( Drehkraft) auf die Welle, von Wasser – Gas – Dampf – Elektro – Wind – oder manueller – Kraft ausgehend,in eine grössere Bedarfskraft hydraulisch übersetzt benötigt wird.

**Patentansprüche**

1. Hydro – Energie,neuartiges hydraulisches Uebersetzungs – System.Eine Energieübersetzung auf hydraulischer Basis,wobei eine mindere zugeführte Kraft in eine hohe Entnahmekraft umgesetzt wird.

   Dieses hydraulische System,dass ohne druckerzeugende Pumpen arbeitet,vollbringt in einer radial umlaufenden hydraulischen Anlage hohe Uebersetzungs – Kräfte.

Kennzeichnend ist hierbei,dass die kraftüber – setzende hydraulische Druckflüssigkeit,in Zy – lindern mit Kolben erfolgt,die zwei unter – schiedliche Durchmesser(in der Fläche) haben, jedoch aus einem Stück sind.Jeder Flächen – durchmesser führt eine separate Funktion aus.Die grosse Kolbenfläche nimmt eine ex – terne Drehkraft über eine Welle und Hebel – segmente auf,diese Kraft drückt die kleine Kolbenfläche auf die Hydroflüssigkeit,die auf Druckflächen und Stege wirkt.Zudem drückt die Hydroflüssigkeit auch auf die grosse Kol – benfläche und bewirkt eine zusätzliche Drucksteigerung.Die Hydroflüssigkeit und alle hydraulisch wirkende Segmente sind in einem öldichten Kreisringzylinder eingebaut,der auf einer Welle durch Wälzlager gelagert ist.

Die hydraulische Kraftübersetzungs – Fähig – keit,die aufgrund des Druckfortpflanzungs – Gesetzes gegeben ist,bewirkt hierbei,im Flä – chenverhältnis:Druckfläche des kleinen Kol – bens zu den Flächengrössen der Druckflä – chen,Druckstege und der grossen Kolbenflä – che. Uebersetzungs – Verhältnisse sind gege – ben:von eins zu fünf ca bis eins zu tausend und mehr,je nach Bedarf einer Kraftentnahme.

2. Hydro – Energie nach Patentanspruch 1,Die Verwendung von Kniehebel – Systemen zur Kraftsteigerung in einer rotierenten Anlage.

HYDRO-ENERGIE

$||\,|\,|$ =   DRUCKSTEGE

$\equiv \underline{\equiv}$ = HYDROFLUESSIGKEIT

$\uparrow\uparrow\uparrow{\rightarrow}\downarrow$ = HYDRAULISCHER-ARBEITSDRUCK

HYDRO-ENERGIE

ohne Abdeckung und Druckflächen

13 = Ventil für Lufteinschluss-und Leckölregulierung

HYDRO-ENERGIE

Kreisring in der Mitte geschnitten,ohne Druckflächen

1=Kreisringzylinder    7=Zwischenstück
2=Abdeckung (Deckel    8=Kniehebelsystem
3=Welle                9=Ringdrucksegment
4=Hydrozylinder       10=Wälzlager
5=Hydrokolben         11=Lagerbock
Konsole               12=Schrauben

HYDRO-ENERGIE
Beispiel für Einsatz bei Felo oder Radtrieb
allgemein

Europäisches
Patentamt

**EUROPÄISCHER RECHERCHENBERICHT**

Nummer der Anmeldung

EP    91 11 9423

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 791 824 (NICOLAU) <br> * Zusammenfassung; Abbildung 1 * <br> --- | 1,2 | F01B21/02 <br> F16D31/02 |
| A | DE-A-2 137 114 (KRESS) <br> * das ganze Dokument * <br> --- | 1,2 | |
| A | US-A-3 557 661 (ORSHANSKY) <br> * Spalte 1, Zeile 1 - Spalte 2, Zeile 70; Abbildung 1 * <br> --- | 1,2 | |
| A | GB-A-14 116 A.D. 1912 (SCRIVENER) <br> * das ganze Dokument * <br> ----- | 1,2 | |
| | | | **RECHERCHIERTE SACHGEBIETE (Int. Cl.5)** <br><br> F01B <br> F16D |

Der vorliegende Recherchenbericht wurde für alle Patentansprüche erstellt

| Recherchenort | Abschlußdatum der Recherche | Prüfer |
|---|---|---|
| DEN HAAG | 05 JUNI 1992 | WASSENAAR G. |